**Europäisches Patentamt**

(19) **European Patent Office**

**Office européen des brevets**

(11) Numéro de publication: **0 106 758**
**B1**

(12) # FASCICULE DE BREVET EUROPEEN

(45) Date de publication du fascicule du brevet:
**13.05.87**

(51) Int. Cl.⁴: **C 03 B 35/24,** C 03 B 35/20, C 03 B 35/16, C 03 B 29/04

(21) Numéro de dépôt: **83401965.5**

(22) Date de dépôt: **07.10.83**

(54) **Dispositif pour l'aide au soutien d'une plaque de verre portée à sa température de déformation et reposant simultanément sur des appuis mécaniques.**

(30) Priorité: **11.10.82 FR 8216969**

(43) Date de publication de la demande:
**25.04.84 Bulletin 84/17**

(45) Mention de la délivrance du brevet:
**13.05.87 Bulletin 87/20**

(84) Etats contractants désignés:
**AT BE CH DE FR GB IT LI LU NL SE**

(56) Documents cités:
**DE - A - 2 741 098**
**US - A - 3 223 498**
**US - A - 3 665 730**
**US - A - 3 809 542**

(73) Titulaire: **SAINT-GOBAIN VITRAGE, Les Miroirs 18, avenue d'Alsace, F-92400 Courbevoie (FR)**

(84) Etats contractants désignés: **BE CH FR GB IT LI LU NL SE AT**

(73) Titulaire: **VEGLA Vereinigte Glaswerke GmbH, Viktoriaallee 3-5, D-5100 Aachen (DE)**

(84) Etats contractants désignés: **DE**

(72) Inventeur: **Blank, Kurt, Haselsteig 13, D-5100 Aachen (DE)**
Inventeur: **Halverschmidt, Friedrich, Christian-derich Strasse 16, D-5120 Herzogenrath (DE)**
Inventeur: **Reinmold, Heinz-Josef, Scherbierstrasse 6, D-5100 Aachen (DE)**
Inventeur: **Audi, Josef, Kronenberg 61, D-5100 Aachen (DE)**
Inventeur: **Kaesmacher, Jakob, Peitschenweg 27, D-5190 Stolberg (DE)**
Inventeur: **Reinicke, Ralf, Ohmstrasse 84, D-5000 Köln (DE)**
Inventeur: **Niedenhoff, Udo, Bartholomäus Strasse 5a, D-5000 Köln (DE)**

(74) Mandataire: **Leconte, Jean-Gérard et al, Saint-Gobain Recherche 39, Quai Lucien Lefranc, F-93304 Aubervilliers Cedex (FR)**

**Description**

L'invention concerne un dispositif pour le délestage c'est-à-dire l'aide au soutien d'une plaque de verre, chauffée à une température de déformation, reposant simultanément sur des appuis mécaniques tels que des rouleaux transporteurs rectilignes ou cintrés, un châssis de bombage encore appelé squelette ou autres, au moyen d'un courant de gaz chaud, en vue d'empêcher des déformations indésirables de la plaque de verre, dispositif ayant, au-dessous de la plaque de verre, un grand nombre d'orifices de sortie à travers lesquels des jets de gaz sont émis et dirigés vers la surface inférieure de la plaque de verre.

Il est connu notamment par le brevet US-A 3 809 542 de supporter des plaques de verre uniquement par un coussin gazeux qui peut être alimenté en gaz chaud. Mais il s'agit d'une autre technique qui en outre implique de prévoir des moyens autres que ceux qui supportent les plaques de verre pour assurer la progression desdites plaques de verre.

Dans un autre dispositif déjà connu, du genre de celui auquel se rapporte l'invention (DE-A1 2 741 098), utilisé dans un four de chauffage du verre en vue de la trempe, muni de rouleaux transporteurs horizontaux, la cloison supérieure de fermeture d'une enceinte contenant du gaz sous pression, disposée sous le verre, est équipée d'un grand nombre de buses qui sont disposées en lignes, transversalement à l'axe longitudinal du four, dans les espaces entre les rouleaux transporteurs et qui aboutissent juste au-dessous des plaques de verre. Dans ce dispositif déjà connu, le délestage souhaité est certes obtenu, mais il s'accompagne d'une déformation subsidiaire indésirable de la plaque de verre par les jets de gaz.

L'invention a pour objectif de réaliser un dispositif de ce dernier type permettant seulement un délestage partiel de plaques de verre, sans altération de leur stabilité, et particulièrement sans déformation subsidiaire par les jets de gaz, ne modifiant pas le mode d'entraînement desdites plaques de verre.

Conformément à l'invention, cet objectif est atteint par le fait que des orifices de sortie de jets de gaz sous pression, soit ménagés dans la cloison de fermeture supérieure d'une enceinte contenant le gaz sous pression, soit disposés à l'extrémité de buses ou de conduits alimentés en gaz sous pression, sont disposés avec une répartition uniforme au moins sur la totalité de la surface recouverte par la plaque de verre, et que l'écartement (A) entre le plan de sortie des jets matérialisé soit par la cloison de fermeture supérieure de l'enceinte, soit par les extrémités des buses ou conduits, et la face inférieure de la plaque de verre est suffisamment grand pour que:

a) au niveau de la face inférieure de la plaque de verre, les jets de gaz qui s'épanouissent de façon conique à partir des orifices se rejoignent et se recouvrent mutuellement de façon à constituer un champ d'écoulement uniforme,

b) et en même temps, la condition A supérieure à F/L soit satisfaite, F étant la somme des sections des orifices de sortie du gaz sous la plaque de verre et L représentant le périmètre de la plaque de verre.

Des essais à grande échelle ont montré que seul un courant gazeux créé au moyen du dispositif conforme à l'invention est en mesure de délester à coup sûr une plaque de verre se trouvant à une température supérieure à celle de son point de ramollissement, et cela sans aucun effet défavorable secondaire notamment sans aucune déformation de ladite plaque de verre sous l'effet du courant gazeux lui-même. Au contraire, avec les dispositifs classiques de ce genre, en particulier celui décrit dans le brevet allemand 2 741 098 mentionné plus haut, en raison de la disposition en lignes des buses, non seulement le délestage n'est pas uniforme, mais encore, du fait que les buses débouchent juste en dessous de la plaque de verre, ce sont des jets indépendants séparés qui atteignent la surface du verre, y provoquant ainsi des déformations locales. Le dispositif conforme à l'invention crée au contraire au niveau du verre un écoulement du gaz rigoureusement uniforme et homogène, avec une vitesse d'écoulement constante, sans aucun pic de pression.

L'écartement minimum entre les orifices de sortie du gaz et la plaque de verre permet en outre de rendre la pression statique du gaz au niveau de la face inférieure de la plaque de verre négligeable devant la pression dynamique, si bien que la compensation du poids de la plaque de verre est due exclusivement à la pression dynamique de la masse de gaz en écoulement. Si l'écartement A était plus faible, et s'il apparaissait par conséquent des différences de pression statique sous la plaque de verre, entre son centre et ses zones marginales, l'effet de la pression statique, ainsi qu'il s'est avéré, serait plus fort au centre que sur les bords où le gaz peut plus facilement s'échapper latéralement, et il en résulterait un cintrage de la plaque de verre, car celle-ci se déforme très facilement lorsqu'elle est à température élevée.

Les orifices de sortie des jets de gaz peuvent être de simples perçages dans le couvercle d'une enceinte contenant le gaz sous pression, mais il peut s'agir aussi de l'extrémité de buses tubulaires ou de conduits alimentés en gaz sous pression. Cependant, dans le cas de buses tubulaires ou de conduits, les jets de gaz sont plus cohérents et mieux focalisés si bien que leur épanouissement en forme de cône est moins marqué qu'avec une simple plaque perforée. En conséquence, l'écartement A entre les orifices délivrant le gaz sous pression pourra être plus faible lorsque ces orifices seront de simples perçages au travers d'une cloison limitant une enceinte contenant le gaz, plutôt que les extrémités de buses tubulaires ou de conduits, même si les sections des orifices et leurs espacements mutuels sont les mêmes dans les deux cas. L'important est donc de se placer dans des conditions telles qu'au niveau de la surface inférieure de la plaque de verre, la pression statique du gaz soit négligeable devant la pression dynamique.

Si l'écartement A minimum est un élément crucial, l'écartement maximum est beaucoup moins strictement déterminé. Toutefois, dans la pratique on a constaté qu'au-delà d'un certain écartement égal à peu près à trois ou quatre fois l'écartement minimum, la plaque de verre sous l'influence du courant gazeux est plus instable. Pour cette raison il est recommandé de choisir un écartement entre le plan de sortie des jets et la plaque de verre qui ne soit pas supérieur à quatre fois l'écartement minimum fixé pour la même configuration des orifices et la même pression du gaz.

De bons résultats sont obtenus avec une plaque perforée dans laquelle les centres de perçages coïncident avec les points d'intersection d'un réseau de lignes se croisant perpendiculairement, dont les écartements mutuels sont égaux dans les deux directions. Pour un écartement mutuel entre centres des perçages de 10 à 50 mm environ, il est avantageux de choisir un diamètre des perçages de 5 à 25 mm environ.

Il s'est en outre avéré qu'il est important d'éviter toutes sortes de fluctuations de pression ou d'oscillations dans l'écoulement gazeux. Suivant l'invention, la régulation de la quantité de gaz qui s'écoule s'effectue donc, non par des pointeaux ou des tiroirs qui pourraient donner lieu à des oscillations de la colonne gazeuse, mais exclusivement en réglant le régime d'un ventilateur.

L'invention est particulièrement recommandée pour le délestage de plaques de verre chauffées à la température de trempe lorsqu'on les fait avancer en position horizontale sur les rouleaux transporteurs cylindriques disposés les uns à la suite des autres dans le four de chauffage. Grâce à l'utilisation du dispositif conforme à l'invention, la qualité optique des plaques de verre trempées ainsi transportées peut être notablement améliorée.

Le dispositif de l'invention peut également s'utiliser avec de bons résultats dans les fours de bombage à rouleaux, dans lesquels les rouleaux transporteurs sont cintrés et constituent la forme de bombage sur laquelle les plaques de verre portées à leur température de ramollissement s'affaissent sous l'effet de leur propre poids. De tels procédés de bombage et de tels fours de bombage sont décrits par exemple dans les brevets français FR-A 1 476 785 et FR-A 2 312 463. Même lorsqu'une fraction importante du poids propre des plaques de verre est compensée par un courant gazeux engendré avec le dispositif conforme à l'invention pour permettre l'amélioration souhaitée de la qualité optique, la fraction résiduelle du poids de la plaque de verre non prise en charge par le courant gazeux et avec laquelle ladite plaque s'appuie sur les rouleaux cintrés suffit à l'acquisition du bombage.

On peut également utiliser avec succès le dispositif dans le cadre du procédé dit «de cintrage sur squelette», dans lequel une ou plusieurs plaques de verre disposées les unes au-dessus des autres, initialement planes, sont placées sur un châssis de bombage ou squelette et sont envoyées dans un four de bombage, dans lequel elles sont chauffées et, lorsqu'est atteinte la température de ramollissement, elles se bombent en s'affaissant sous l'effet de leur propre poids. Grâce à l'invention, on peut empêcher que dans de tels cas, les zones des plaques de verre situées entre les régions d'appui ne s'affaissent trop fortement. Ceci est particulièrement important lors du cintrage simultané de plusieurs plaques de verre pour la fabrication de vitrages feuilletés cintrés, en particulier lorsque la plaque de verre inférieure est constituée de verre plus mince que les plaques de verre se trouvant au-dessus. En de tels cas, la plaque de verre inférieure mince a en effet tendance, en raison de sa plus faible rigidité et de son échauffement plus rapide, à se cintrer plus fortement que les plaques de verre plus épaisses situées au-dessus, ce qui rend beaucoup plus difficile l'assemblage des plaques de verre ainsi cintrées pour constituer des vitrages feuilletés.

D'autres caractéristiques et avantages de l'invention apparaissent dans la description qui va suivre accompagnée d'exemples de mises en œuvre décrits en référence aux dessins qui représentent:

Figure 1 un four destiné à réchauffer les plaques de verre jusqu'à leur température de trempe, ce four étant équipé de rouleaux transporteurs cylindriques et d'un dispositif conforme à l'invention pour créer un écoulement de gaz porteur,

Figure 2 un four de bombage avec des rouleaux cintrés et un dispositif conforme à l'invention pour créer un écoulement de gaz porteur,

Figure 3 un four de bombage dans lequel le verre est soutenu par des chariots portant chacun un squelette et dans lequel également un dispositif selon l'invention est prévu pour créer un écoulement de gaz porteur.

Figure 4 une vue de détail d'un vitrage composite à plusieurs épaisseurs, disposé sur le squelette de bombage de la figure 3.

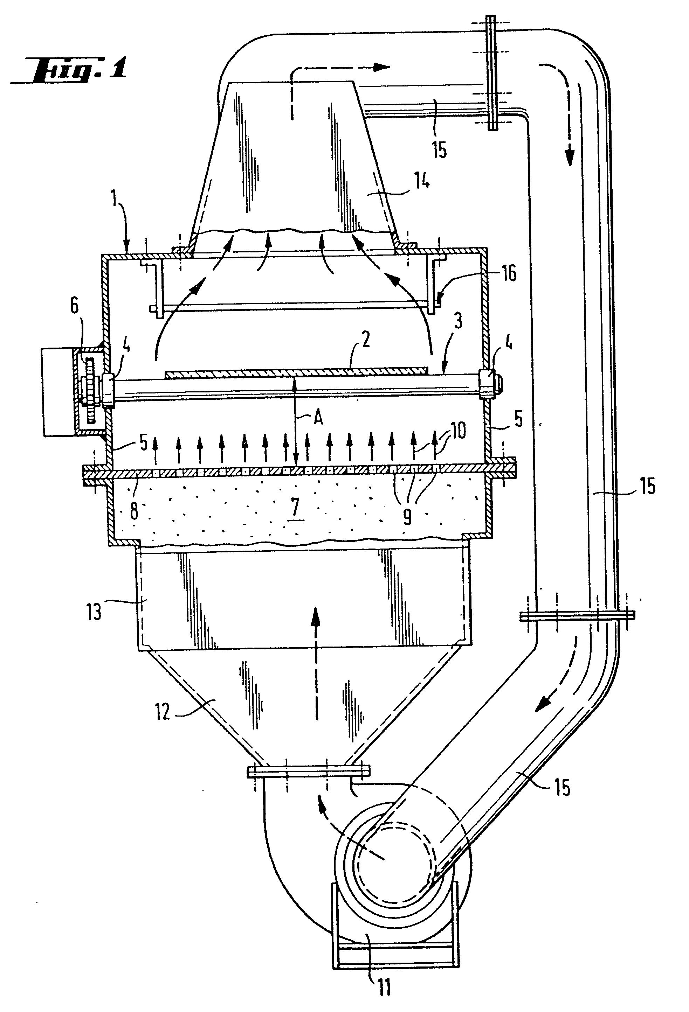

La figure 1 montre une chambre 1, notamment un four de réchauffage du verre par exemple en vue de la trempe, dans lequel des plaques de verre 2 circulent à plat sur des rouleaux rectilignes 3 tournants dans des paliers 4 montés dans les parois latérales 5 de la chambre 1, entraînés en rotation grâce à des pignons 6 reliés par une chaîne non représentée à un moyen moteur également non représenté.

Conformément à l'invention, un dispositif de soufflage d'un gaz destiné à participer au soutien des plaques de verre 2 est adjoint à cette chambre 1. Ce dispositif comporte une enceinte 7 disposée à la partie inférieure de la chambre 1, en particulier du four de réchauffage, sur toute sa largeur, sous les rouleaux 3, contenant du gaz chaud sous pression, en général de l'air, fermée à sa partie supérieure par une cloison 8 percée d'une pluralité d'orifices 9 permettant à des jets de gaz figurés par des flèches verticales ascendantes 10, de s'échapper en direction des plaques de verre 2.

Les orifices 9 ont un diamètre de 14 mm et sont répartis le long de lignes orthogonales, les unes parallèles à la direction d'avancement des plaques de verre 2 dans le four 1, les autres parallèles aux rouleaux 3, avec un pas identique dans les deux directions et égal à 30 mm.

Dans d'autres réalisations, ce pas peut varier, il peut en particulier aller de 10 à 50 mm environ et de préférence être compris entre 25 et 35 mm. De la même façon que le pas, le diamètre des orifices 9 peut être différent dans d'autres réalisations; ainsi on peut choisir des diamètres d'orifices de 5 à 25 mm environ et de préférence de 12 à 15 mm.

La cloison 8 est située à une distance A du plan qui passe par les génératrices supérieures de tous les rouleaux 3, autrement dit de la face inférieure des plaques de verre 2. Cette distance A est, dans notre exemple de réalisation, de 15 cm environ. Toutefois dans d'autres réalisations elle peut varier dans des limites assez larges, l'essentiel étant qu'elle soit suffisante pour que d'une part les jets de gaz issus des différents orifices 9 se rejoignent et se recouvrent partiellement de façon à présenter au niveau du verre un écoulement uniforme et homogène, et que d'autre part, la pression statique du gaz au niveau du verre soit négligeable devant la pression dynamique. Ainsi dans tous les cas, l'écartement A ne sera jamais inférieur à 80 mm; toutefois pour des configurations particulières des cloisons 8, l'écartement minimum acceptable sera supérieur à ce chiffre minimum.

La demanderesse a constaté que dans tous les cas, cette distance A devait rester supérieure à F/L, F étant la somme des sections des orifices 9 de sortie du gaz au-dessous de la plaque de verre 2, sur une surface égale à celle de ladite plaque de verre 2 et L étant le périmètre de la plaque de verre 2 traitée. Des distances A comprises entre 100 et 250 mm seront couramment pratiquées.

Le gaz chaud, l'air en général, est mis sous pression par un ventilateur 11. Ce gaz est envoyé à l'enceinte 7 par l'intermédiaire de répartiteurs 12 et d'un caisson 13 de mise en température disposé comme dans notre exemple de réalisation, immédiatement sous l'enceinte 7. Ce caisson 13 de mise en température est équipé de moyens de chauffage non représenté, aptes à réchauffer le gaz à une température du même ordre que celle du verre, à savoir environ 650°C lorsqu'il s'agit de verre porté à sa température de ramollissement. Avantageusement la mise en service de ces moyens de chauffage est commandé par un système de régulation de façon à souffler sur le verre un gaz à température constante.

Avantageusement, en partie supérieure de la chambre ou four 1, est prévue une hotte 14 d'aspiration qui extrait le gaz ayant traversé ladite chambre ou ledit four 1, et le reconduit à travers une gaine 15 vers le ventilateur 11.

Ainsi le gaz chaud est transporté en circuit fermé et l'apport calorifique pour le maintenir à température élevée, de façon à ne pas refroidir le verre, est assez réduit.

Grâce à l'utilisation du ventilateur 11, la pression du gaz dans l'enceinte 7 est très stable. On choisit par exemple de l'établir aux alentours de 250 Pa soit approximativement 25 mm de colonne d'eau (25 mm C.E.). Cette pression pourra être comprise entre environ 100 et 600 Pa (approximativement entre 10 et 60 mm C.E.) en fonction de l'importance du soutien que l'on voudra fournir aux plaques de verre 2, en fonction de l'épaisseur et donc du poids desdites plaques 2. Avec de telles gammes de pression, on pourra obtenir une pression sur le verre de l'ordre de 20 à 300 Pa (2 à 30 mm C.E.) et acquérir un délestage des feuilles de verre couramment fabriquées, qui soit de l'ordre de 20 à 80% de leur poids total.

De préférence, pour que la face inférieure et la face supérieure des plaques de verre 2 soient dans des ambiances thermiques équivalentes, on prévoit des radiateurs 16 accrochés à la paroi supérieure de la chambre ou four 1 et destinés à réchauffer la face supérieure des feuilles de verre 2, moins réchauffée que la face inférieure par le courant de gaz chaud soufflé au travers des orifices 9.

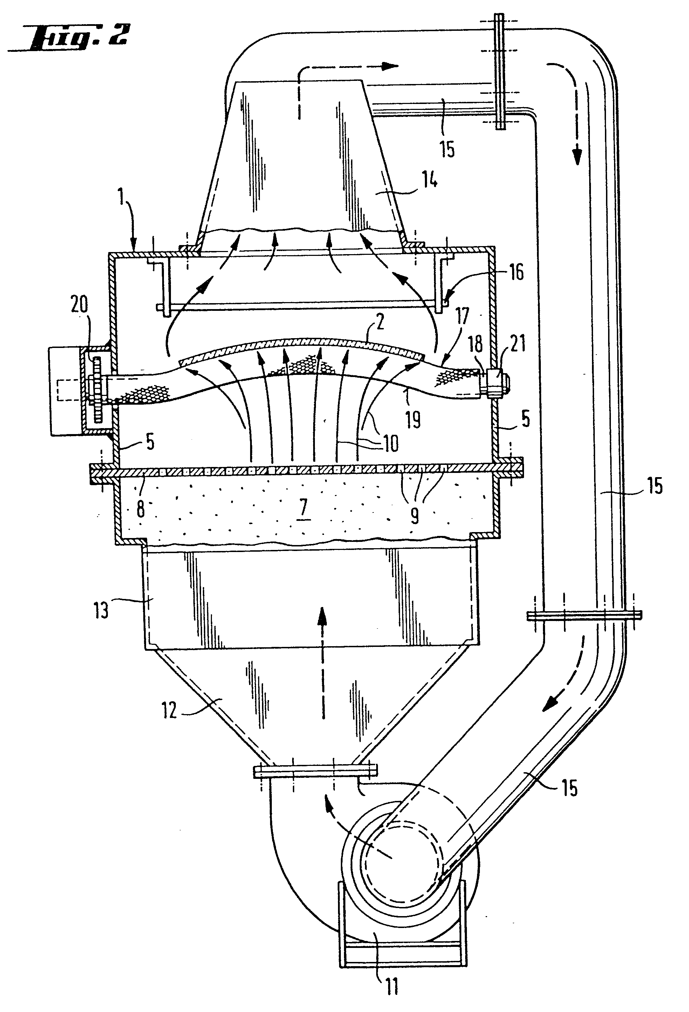

La figure 2 montre une installation du même type que celle de la figure 1, dans laquelle les plaques de verre 2 ne reposent plus sur des rouleaux rectilignes, mais sur des rouleaux cintrés 17 constitués chacun d'une tige cintrée 18 recouverte d'une gaine tubulaire tournante 19, flexible longitudinalement mais rigide en rotation, entraînée en rotation sur elle-même et autour de la tige cintrée 18 qui la supporte par des pignons dentés 20. Comme décrit dans les publications de brevets français FR-A 1 476 785 et FR-A 2 312 463 déjà citées, ces tiges cintrées 18 sont supportées dans des paliers 21 et sont inclinables pour modifier le rayon de courbure de la forme de bombage sur laquelle évoluent les plaques de verre 2, par pivotement dans ces paliers 21 autour de l'axe qui passe par leurs extrémités.

Les autres éléments de l'installation de cette figure 2 sont identiques à ceux de la figure 1 et portent la même référence. La chambre 1 est dans ce cas de la figure 2 plutôt un four de bombage dans lequel les plaques de verre 2 évoluent à température maintenue élevée, tout en s'affaissant sur le lit de conformation constitué par les divers rouleaux cintrés 17.

Une telle installation permet de fournir aux plaques de verre 2 qui se déplacent dans le four 1 sur les rouleaux cintrés 17, un soutien par le gaz soufflé par les orifices 9, évitant ainsi que la totalité du poids desdites plaques 2 ne soit supportée par lesdits rouleaux 17.

Les conditions du fonctionnement sont identiques à celles énoncées en relation avec la figure 1.

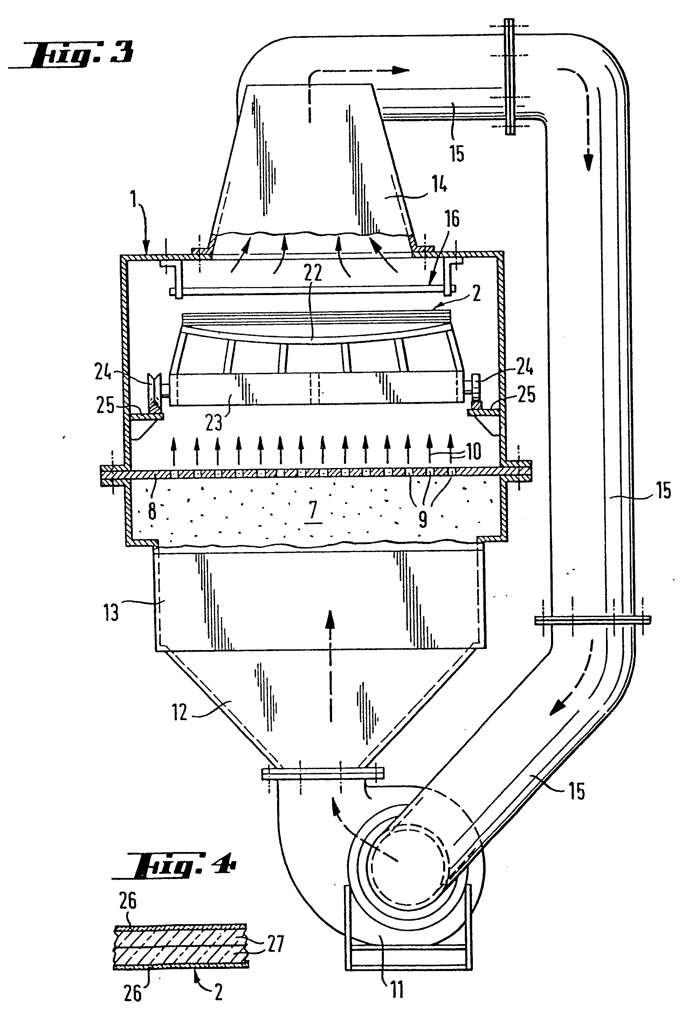

La figure 3 montre une installation dans laquelle les plaques de verre 2 reposent non plus sur des rouleaux rectilignes 3 ou cintrés 17 comme précédemment, mais sur un châssis de bombage 22 encore appelé «squelette», formé de zones d'appui, ayant en particulier la forme d'un cadre. Ce châssis de bombage 22 est monté sur un chariot 23 équipé de roulettes 24 qui lui permettent de se déplacer sur des rails 25 à l'intérieur de la chambre 1. Cette chambre 1 est en particulier un four de bombage maintenu à température élevée pour que les plaques de verre 2 qui y passent, soient réchauffées jusqu'à leur température de ramollissement et se bombent en s'affaissant petit à petit sous l'effet de leur propre poids. Les autres éléments de l'installation sont identiques à ceux montrés sur les figures 1 et 2, ils portent les mêmes références et fonctionnent de la même façon avec les mêmes réglages.

Les plaques de verre 2 peuvent être bombées individuellement ou au contraire en groupes, plusieurs plaques étant empilées les unes au-dessus des autres et posées sur un squelette 22 en vue de se bomber exactement de la même façon pour constituer un même vitrage feuilleté. Comme déjà indiqué, les plaques de verre 2 entrant dans la composition d'un tel vitrage feuilleté peuvent être de différentes épaisseurs et en particulier, peuvent intervenir en surface dudit vitrage des plaques de verre mince 26 comme illustrée sur la figure 4.

Ainsi le soutien que procure le gaz soufflé permet d'empêcher les irrégularités de bombage et en particulier le bombage trop important dans la partie centrale des plaques de verre 2. Dans le cas où une plaque de verre mince 26 est disposée sur un châssis de bombage 22, en partie inférieure d'un assemblage de plusieurs plaques plus épaisses 27 comme montré figure 4, le soutien procuré par le gaz soufflé, évite la courbure irrégulière et en particulier plus importante dans la zone centrale de cette plaque mince 26, sous l'effet de la chaleur.

## Revendications

1. Dispositif pour le soutien partiel d'une plaque de verre (2) chauffée à température de déformation, reposant simultanément sur des appuis mécaniques tels que rouleaux transporteurs rectilignes (3) ou cintrés (17) ou châssis de bombage (22), au moyen d'un courant de gaz chaud, en vue d'empêcher des déformations indésirables de la plaque de verre, dans lequel sont disposés en-dessous de la plaque de verre des orifices de sortie de jets de gaz sous pression, soit ménagés dans la cloison (8) de fermeture supérieure d'une enceinte (7) contenant le gaz sous pression, soit disposés à l'extrémité de buses ou de conduits alimentés en gaz sous pression, ces jets de gaz étant émis et dirigés vers la surface inférieure de la plaque de verre (2), caractérisé en ce que ces orifices sont disposés avec une répartition uniforme au moins sur la totalité de la surface recouverte par la plaque de verre (2) et en ce que l'écartement (A) entre le plan de sortie des jets matérialisé soit par la cloison (8) de fermeture supérieure de l'enceinte, soit par les extrémités des buses ou conduits, et la face inférieure de la plaque de verre (2) est suffisamment grand pour que au niveau de ladite face inférieure de la plaque de verre (2) les jets de gaz qui s'épanouissent de façon conique à partir de ces orifices se rejoignent et se recouvrent mutuellement de façon à constituer un champ d'écoulement uniforme et homogène pour que en même temps la condition A supérieur à F/L soit satisfaite, F étant la somme des sections des orifices de sortie du gaz sur une surface égale à celle de la plaque de verre (2), et L étant le périmètre de la plaque de verre (2).

2. Dispositif selon la revendication 1, caractérisé en ce que les orifices de sortie du gaz consistent en des perçages (9) dans la paroi (8) de fermeture supérieure de l'enceinte (7).

3. Dispositif selon la revendication 1 ou 2, caractérisé en ce que les orifices ont un diamètre de 5 à 25 mm et sont répartis avec un pas de 10 à 50 mm.

4. Dispositif selon l'une des revendications 1 à 3, caractérisé en ce que l'écartement (A) est au moins égal à environ 80 mm.

5. Dispositif selon la revendication 4, caractérisé en ce que l'écartement (A) est compris entre 100 et 250 mm.

6. Dispositif selon l'une des revendications 1 à 5, caractérisé en ce que pour créer un courant gazeux capable de fournir une pression au niveau du verre de l'ordre de 20 à 300 Pa (2 à 30 mm C.E.), on établit une surpression dans l'enceinte (7) de l'ordre de 100 à 600 Pa (de 10 à 60 mm C.E.) et les orifices au travers de la cloison supérieure (8) de fermeture de cette enceinte (7) ont un diamètre compris entre 5 et 25 mm et sont répartis le long de lignes orthogonales suivant un pas de 10 à 50 mm.

7. Dispositif selon la revendication 6, caractérisé en ce que les diamètres des orifices sont compris entre 12 et 15 mm.

8. Dispositif selon l'une des revendications 6 ou 7, caractérisé en ce que le pas des orifices est compris entre 25 et 35 mm.

9. Dispositif selon l'une des revendications 1 à 8, caractérisé en ce que au-dessus de l'enceinte (7) et des appuis mécaniques destinés à porter les plaques de verre (2), est disposée une hotte (14) d'aspiration du gaz reliée à l'enceinte (7) par une gaine (15) en vue du recyclage dudit gaz.

10. Dispositif selon la revendication 9, caractérisé en ce que le circuit de transport du gaz comporte un ventilateur (11) à régime variable, la régulation du soufflage du gaz s'effectuant par modification du régime du ventilateur.

11. Dispositif selon l'une des revendications 9 ou 10, caractérisé en ce que le circuit de transport du gaz comporte des moyens de chauffage.

12. Dispositif selon la revendication 11, caractérisé en ce qu'il comporte un système de régulation de la température du gaz soufflé.

13. Dispositif selon l'une des revendications 11 ou 12 précédentes, caractérisé en ce que des radiateurs (16) sont prévus au-dessus des appuis mécaniques (3, 17, 22) portant les plaques de verre (2) de manière à obtenir une ambiance thermique équivalente pour les faces inférieures et supérieures des plaques de verre.

14. Application du dispositif selon l'une des revendications précédentes au soutien de plaques de verre (2) reposant sur des rouleaux transporteurs rectilignes (3) à l'intérieur d'un four.

15. Application du dispositif selon l'une des revendications 1 à 13 au soutien de plaques de verre (2) reposant sur des rouleaux cintrés (17) à l'intérieur d'un four de bombage.

16. Application du dispositif selon l'une des revendications 1 à 13 au soutien de plaques de verre (2) reposant sur des châssis de bombage (22).

**Patentansprüche**

1. Vorrichtung zur teilweisen Unterstützung einer auf Verformungstemperatur erhitzten, gleichzeitig auf mechanischen Stützvorrichtungen wie geraden oder gebogenen Transportwalzen (3; 17) oder Biegerahmen (22) aufliegenden Glasscheibe (2) mit Hilfe eines heissen Gasstromes zur Verhinderung unerwünschter Deformationen der Glasscheibe, bei der unterhalb der Glasscheibe Austrittsöffnungen für unter Überdruck stehendes Gas vorgesehen sind, die entweder in der oberen Abschlusswand (8) eines das Gas unter Überdruck enthaltenden Behälters (7) oder am Ende von mit Druckgas versorgten Düsen oder Rohren angeordnet sind, und wobei diese Gasströme gegen die untere Oberfläche der Glasscheibe (2) gerichtet sind, dadurch gekennzeichnet, dass diese Austrittsöffnungen wenigstens auf der gesamten von der Glasscheibe (2) überdeckten Fläche gleichmässig verteilt sind, dass der Abstand (A) zwischen der entweder durch die obere Abschlusswand (8) des Behälters oder durch die Enden der Düsen oder Rohre gebildeten Strahlenaustrittsebene und der unteren Oberfläche der Glasscheibe (2) wenigstens so gross ist, dass in Höhe der unteren Oberfläche der Glasscheibe (2) die sich von den Austrittsöffnungen an konisch erweiternden Gasstrahlen sich vereinigen und sich gegenseitig überlappen und so ein gleichmässiges und homogenes Strömungsfeld bilden, und dass gleichzeitig die Bedingung A grösser als F/L erfüllt ist, wobei F die Summe der Querschnittsflächen der Gasaustrittsöffnungen auf einer der Fläche der Glasscheibe (2) entsprechenden Fläche und L der Umfang der Glasscheibe (2) bedeuten.

2. Vorrichtung nach Anspruch 1, dadurch gekennzeichnet, dass die Gasaustrittsöffnungen aus Bohrungen (9) in der oberen Abschlusswand (8) des Behälters (7) bestehen.

3. Vorrichtung nach Anspruch 1 oder 2, dadurch gekennzeichnet, dass die Öffnungen einen Durchmesser von 5 bis 25 mm aufweisen und mit einem gegenseitigen Abstand von 10 bis 50 mm angeordnet sind.

4. Vorrichtung nach einem der Ansprüche 1 bis 3, dadurch gekennzeichnet, dass der Abstand (A) wenigstens etwa 80 mm beträgt.

5. Vorrichtung nach Anspruch 4, dadurch gekennzeichnet, dass der Abstand (A) 100 bis 250 mm beträgt.

6. Vorrichtung nach einem der Ansprüche 1 bis 5, dadurch gekennzeichnet, dass zur Bildung eines Gasstromes, der auf die Glasscheibe einen Druck von 20 bis 300 Pa (2 bis 30 mm WS) ausübt, in dem Gefäss (7) ein Überdruck in Höhe von 100 bis 600 Pa (10 bis 60 mm WS) erzeugt wird und die in der oberen Abschlusswand (8) dieses Behälters (7) angebrachten Öffnungen einen Durchmesser zwischen 5 und 25 mm aufweisen und entlang von in einem gegenseitigen Abstand von 10 bis 50 mm rechtwinklig zueinander verlaufenden Linien angeordnet sind.

7. Vorrichtung nach Anspruch 6, dadurch gekennzeichnet, dass die Öffnungen einen Durchmesser von 12 bis 15 mm aufweisen.

8. Vorrichtung nach einem der Ansprüche 6 oder 7, dadurch gekennzeichnet, dass der gegenseitige Abstand der Öffnungen 25 bis 35 mm beträgt.

9. Vorrichtung nach einem der Ansprüche 1 bis 8, dadurch gekennzeichnet, dass oberhalb des Behälters (7) und der mechanischen Stützvorrichtungen für die Glasscheiben (2) eine Abzugshaube (14) für das Gas angeordnet und durch eine Rohrleitung (15) zur Rückführung des Gases mit dem Behälter (7) verbunden ist.

10. Vorrichtung nach Anspruch 9, dadurch gekennzeichnet, dass die das Gas im Kreislauf führende Rohrleitung einen Ventilator mit veränderbarer Leistung umfasst, wobei die Regelung des Gasstromes durch Veränderung der Ventilatorleistung erfolgt.

11. Vorrichtung nach Anspruch 9 oder 10, dadurch gekennzeichnet, dass die das Gas im Kreislauf führende Rohrleitung Mittel zum Aufheizen des Gasstromes umfasst.

12. Vorrichtung nach Anspruch 11, dadurch gekennzeichnet, dass sie ein Temperaturregelsystem für das Gas umfasst.

13. Vorrichtung nach Anspruch 11 oder 12, dadurch gekennzeichnet, dass oberhalb der die Glasscheiben (2) tragenden mechanischen Stützvorrichtungen (3, 17, 22) Heizstrahler (16) vorgesehen sind, um für die unteren und die oberen Oberflächen der Glasscheiben gleiche thermische Umgebungsbedingungen zu erhalten.

14. Anwendung der Vorrichtung nach einem der vorausgehenden Ansprüche zur Gewichtsentlastung von Glasscheiben (2), die innerhalb eines Ofens auf geraden Transportwalzen (3) aufliegen.

15. Anwendung der Vorrichtung nach einem der Ansprüche 1 bis 13 zur Gewichtsentlastung von Glasscheiben (2), die innerhalb eines Biegeofens auf gebogenen Transportwalzen (17) aufliegen.

16. Anwendung der Vorrichtung nach einem der Ansprüche 1 bis 13 zur Gewichtsentlastung von Glasscheiben (2), die auf Biegerahmen (22) aufliegen.

## Claims

1. A device for partially supporting a glass plate (2) heated to a deformation temperature, resting simultaneously on mechanical supports such as straight (3) or curved (17) transport rollers or a curving chassis (22), by means of a stream of hot gas, in order to prevent undesirable deformations of the glass plate, in which output orifices for jets of gas under pressure are arranged below the glass plate, either provided in the upper closing member (8) of an enclosure (7) containing the gas under pressure, or arranged at the ends of nozzles or feed ducts for gas under pressure, these gas jets being emitted and directed towards the lower surface of the glass plate (2), characterised in that the orifices are arranged with a uniform distribution over at least the whole area covered by the glass plate (2) and in that the separation (A) between the plane of the output of the jets formed by either the upper closing member (8) of the enclosure, or by the ends of the nozzles or ducts, and the lower surface of the glass plate (2) is sufficiently large so that, at the level of said lower surface of the glass plate (2), the gas jets which expand conically from the orifices join each other and overlap to form a uniform, homogeneous field of flow, and so that the condition A is greater than F/L is satisfied, F being the sum of the cross-sections of the output orifices for the gas over a surface area equal to that of the glass plate (2), and L being the perimeter of the glass plate (2).

2. A device according to claim 1, characterised in that the output orifices of the gas comprise holes (9) in the upper closing wall (8) of the enclosure (7).

3. A device according to claim 1 or 2, characterised in that the orifices have a diameter from 5 to 25 mm and are distributed at a separation from 10 to 50 mm.

4. A device according to one of claims 1 to 3, characterised in that the separation (A) is at least about 80 mm.

5. A device according to claim 4, characterised in that the separation (A) is from 100 to 250 mm.

6. A device according to one of claims 1 to 5, characterised in that in order to create a gaseous flow capable of providing a pressure at the level of the glass of the order of 20 to 300 Pa (2 to 30 mm water gauge) an excess pressure of the order of 100 to 600 Pa (10 to 60 mm water gauge) is established in the enclosure (9) and the orifices through the upper closing member (8) of the enclosure (7) have a diameter form 5 to 25 mm and are distributed along orthogonal lines at an interval from 10 to 50 mm.

7. A device according to claim 6, characterised in that the diameters of the orifices are from 12 to 15 mm.

8. A device according to claim 6 or 7, characterised in that the interval between the orifices is from 25 to 35 mm.

9. A device according to one of claims 1 to 8, characterised in that above the enclosure (7) and the mechanical supports intended to carry the glass plates (2) there is arranged a hood (14) for aspirating gas connected to the enclosure (7) by the sheath (15) for recycling of the gas.

10. A device according to claim 9, characterised in that the transport circuit for the gas comprises a variable output impeller (11), the blowing of the gas being regulated by modification of the output of the impeller.

11. A device according to claim 9 or 10, characterised in that the transport circuit for the gas comprises heating means.

12. A device according to claim 11, characterised in that it comprises a system for regulating the temperature of the blown gas.

13. A device according to claim 11 or 12, characterised in that radiators (16) are provided above the mechanical supports (3, 17, 22) carrying the glass plates (2) so as to obtain equivalent thermal conditions for the upper and lower surfaces of the glass plates.

14. Application of a device according to one of the preceding claims to support of glass plates (2) resting on straight transport rollers (3) inside a furnace.

15. Application of a device according to one of claims 1 to 13 to support of glass plates (2) resting on curved rollers (17) inside a curving furnace.

16. Application of a device according to one of claims 1 to 13 to support of glass plates (2) resting on a curving chassis (22).

**Fig. 1**

Fig. 2

**Fig. 3**

**Fig. 4**